# EUROPEAN PATENT SPECIFICATION

(11) **EP 3 301 080 B1**
(45) Date of publication and mention of the grant of the patent: **12.01.2022**
(21) Application number: 16191970.9
(22) Date of filing: 30.09.2016
(51) Int. Cl.: C04B 35/575, C04B 35/626, C04B 35/628, C04B 35/645, C04B 35/565

(54) **CERAMIC COMPONENT COMPRISING SIC AND METHOD OF FORMING THE SAME**
KERAMIKKOMPONENTE, DIE SIC UMFASST, UND VERFAHREN ZUR FORMUNG DAVON
COMPOSANT CÉRAMIQUE COMPRENANT DU SIC ET SON PROCÉDÉ DE FORMATION

(43) Date of publication of application: 04.04.2018
(73) Proprietor: Fiven Norge AS, 4790 Lillesand (NO)
(72) Inventor: Bottiglieri, Stephen, Northbridge, MA 01588 (US); Johannessen, Vidar, 4635 Kristiansand S (NO); Nahas, Nabil, Boston, MA 02115 (US); Hartline, Stephen D., Shrewsbury, MA 01545 (US)
(74) Representative: LIGL IP Consult AS

(56) References cited:
- EP-A1- 2 058 287
- US-A1- 2011 028 301
- DATABASE WPI Week 198647 Thomson Scientific, London, GB; AN 1986-308804 XP002768772, -& JP S61 227968 A (KYOCERA CORP) 11 October 1986 (1986-10-11)
- LANGE F F: "Hot-pressing behaviour of silicon carbide powders with addtions of aluminium oxide", JOURNAL OF MATERIALS SCIENCE, KLUWER ACADEMIC PUBLISHERS, DORDRECHT, vol. 10, 1 January 1975 (1975-01-01), pages 314-320, XP002994149, ISSN: 0022-2461, DOI: 10.1007/BF00540356

## Description

### TECHNICAL FIELD

The following is directed to bodies including silicon carbide and methods of forming such bodies.

### BACKGROUND ART

Various composite materials are commercially available, including certain ceramic composite bodies incorporating silicon carbide. Silicon carbide-based ceramic materials have been utilized in many applications for their refractory properties and/or mechanical properties. Among the types of silicon carbide-based ceramics available, various types exist based on the particular forming process, including for example, sintered silicon carbide, hot pressed silicon carbide, and recrystallized silicon carbide. Each of the various types of silicon carbide bodies can have distinct features. For example, sintered silicon carbide (such as Hexoloy^{®}) can be a very dense material, but is generally expensive and complex to produce. On the other hand, more cost effective but relatively porous silicon carbide materials such as nitride-bonded silicon carbide (known by acronyms such as NBSC and NSIC) have found practical use in refractory applications. Such refractory components include furnace or kiln furniture utilized in connection with holding or supporting work pieces during firing operations, as well as refractory lining materials. Nitride-bonded silicon carbide tends to be a comparatively porous material, oftentimes having a porosity within a range of about 10 to about 15 vol%. These components are manufactured from a green body containing silicon carbide and silicon, and sintering the green body in a nitrogen containing atmosphere at temperatures on the order of 1,500°C. While nitride-bonded silicon carbide has desirable high temperature properties, it unfortunately suffers from poor oxidation resistance when used in oxidizing conditions, due in part to its intrinsic porosity.

JP 61-227968 A discloses a material essentially comprising fine cubic alpha-SiC grains no larger than 10 µm, which contains as a grain boundary phase an aluminum oxide or yttrium oxide compound. A powder mixture containing 1 to 7 % by weight A1203, 0.1 to 5 % by weight Y203, 1 to 5 % by weight Si02 and alpha-SiC is grain-size reduced to below 1 µm, and press-sintered under atmosphere in the temperature range of 1800 to 1950°C.

F.F. Lange, Hot-Pressing Behaviour of Silicon Carbide Powders with Additions of Aluminum Oxide, Journal of Material Science, Vol. 10, 1975, pages 314 to 320, describes the hot-pressing behavior of different silicon carbide powders (average particles sizes ranging from about 0.5 to 9 µm) with aluminum oxide additions ranging from 0.01 to 0.15 volume fractions. Using powders with an average particle size < 3 µm, densities of > 99 % of the theoretical density could be achieved at 1950°C (1 h) with 28 MNm-2 for volume fractions of Al2O3 ≥ 0.02. A liquid phase forms at high temperatures which dissolves the silicon carbide particles to promote densification by a solution-reprecipitation mechanism.

From EP 2 058 287 A1 a cutting insert made of an aluminum oxide-based composite sintered body constituted by a ternary ceramic material including aluminum oxide, silicon carbide, and a sialon is known. The sialon in the aluminum oxide-based composite sintered body is Si-Al-O-N as defined by JCPDS No. 32-0026 in X-ray diffraction analysis.

US 2011/0028301 A1 describes a method for the synthesis of silicon carbide (SiC) bodies having a relative density of 99 % or higher and a SiC body synthesized according to the method.

In view of the state of the art of silicon carbide-based materials, there is a need in the art for improved materials.

### SUMMARY

According to one aspect, a body comprises a first phase comprising silicon carbide; a second phase comprising a metal oxide, wherein the second phase is a discrete intergranular phase located at the grain boundaries of the first phase; wherein a majority of the second phase within the body is located at triple boundary regions between three or more grains of the first phase; wherein the first phase has an average grain size of not greater than 2 µm (microns), and wherein the first phase has a maximum grain size of not greater than 10 µm (microns); wherein the body comprises a second phase count index of at least 1000/100 µm (microns) of image width; and wherein the body comprises an average flexural strength of at least 700 MPa determined according to the four point bend test using configuration B of ASTM C1161-02C.

In another aspect, a method of forming a body is described. The method is as described in the method of claim 10.

### BRIEF DESCRIPTION OF THE DRAWINGS

FIG. 1 includes a flow chart for forming a body including silicon carbide according to an embodiment.
FIG. 2 includes a scanning electron microscope (SEM) image at a magnification of approximately for a portion of a body according to an embodiment.
FIG. 3 includes a SEM image of a portion of a body according to an embodiment.
FIG. 4 includes a SEM image of a portion of a body according to an embodiment.
FIGs. 5A-5H include cross-sectional SEM images taken from samples formed according to the examples.
FIG. 6 includes a plot of the second phase count index versus strength for samples formed according to the examples.
FIG. 7 includes a plot of second phase average area index versus strength for samples formed according to the examples.
FIG. 8 includes a SEM photomicrograph having 6 horizontal lines used to measure the average grain size according to an embodiment.

### DETAILED DESCRIPTION OF THE EMBODIMENT(S)

The following is directed to methods of forming bodies including silicon carbide, and bodies including silicon carbide. The bodies include ceramic materials, including silicon carbide, which may be used in a variety of applications, including for example, but not limited to refractories, sliding components or wear-resistance components (e.g., bearings, seals, valves), mechanical components, corrosion resistant components, and the like.

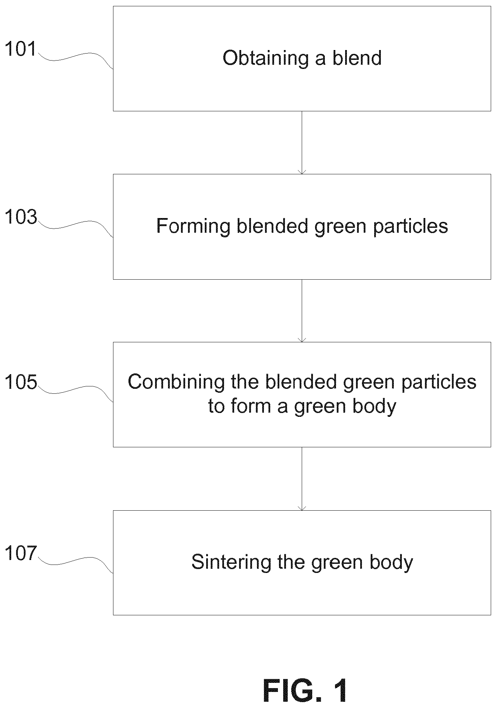

FIG. 1 includes a flow chart for forming a body including silicon carbide.

As illustrated, the process is initiated at step 101, which includes obtaining a blend of powder material. The blend of powder material includes a first powder material comprising silicon carbide and a second powder material comprising a metal oxide. Obtaining the blend may include forming the blend or sourcing the blend from a supplier.

The first powder material including silicon carbide has a particular average particle size that facilitates formation of a body having certain features as noted in the embodiments herein.The first powder material has an average grain size of not greater than 2 µm (microns), such as an average particle size of not greater than 1.5 µm (microns), such as not greater than 1.3 µm (microns) or not greater than 1 µm (micron) or not greater than 0.8 µm (microns) or not greater than 0.5 µm (microns) or not greater than 0.3 µm (microns) or not greater than 0.2 µm (microns) or not greater than 0.1 µm (microns). Still, the first powder material can have an average particle size of at least 0.01 µm (microns), such as at least 0.05 µm (microns) or at least 0.08 µm (microns) or at least 0.1 µm (microns) or at least 0.2 µm (microns) or at least 0.3 µm (microns) or at least 0.4 µm (microns) or at least 0.5 µm (microns). It will be appreciated that the average particle size of the first powder material can be within a range including any of the minimum and maximum values noted above.

The first powder material also has a particular maximum particle size, which may be controlled to facilitate suitable processing and formation of the body. The maximum particle size is generally measured via laser light scattering particle size analyzer and use data from the analyzer to identify the D100 value of the particle size distribution, which is the maximum particle size. The first powder material has a maximum particle size of not greater than 10 µm (microns), such as not greater than 5 µm (microns), such as not greater than 4.5 µm (microns) or not greater than 4 µm (microns) or not greater than 3.5 µm (microns) or not greater than 3 µm (microns) or not greater than 2.5 µm (microns) or not greater than 2 µm (microns) or not greater than 1.5 µm (microns) or not greater than 1 µm (micron) or not greater than 0.8 µm (microns) or not greater than 0.5 µm (microns) or not greater than 0.2 µm (microns). Still, in one non-limiting embodiment, the first powder material can have a maximum particle size of at least 0.01 µm (microns), such as at least 0.05 µm (microns) or at least 0.08 µm (microns) or at least 0.1 µm (microns) or at least 0.2 µm (microns) or at least 0.5 µm (microns) or at least 0.8 µm (microns) or at least 1 µm (micron) or at least 1.5 µm (microns) or at least 2 µm (microns) or at least 2.5 µm (microns) or at least 3 µm (microns) or at least 3.5 µm (microns). It will be appreciated that the maximum particle size of the first powder material can be within a range including any of the minimum and maximum values noted above.

The first powder material has a particular composition, which may be controlled to facilitate suitable processing and formation of the body. For example, the first powder material may include alpha-phase silicon carbide. The first powder material comprises at least 99 wt% alpha phase silicon carbide. In at least one embodiment, the first powder material can consist essentially of alpha-phase silicon carbide. Reference herein to a composition consisting essentially of a given material can include other materials in trace or impurity contents that do not materially affect the properties of the composition. For example, non-limiting examples of impurity contents of materials can include not greater than 0.1 wt% for a total weight of the composition, such as not greater than 0.08 wt% or not greater than 0.06 wt% or no greater than 0.04 wt% or even not greater than 0.02 wt% for a total weight of the composition.

Moreover, according to one embodiment, the first powder material can include a limited content of beta-phase silicon carbide, such as not than 1 wt% or not greater than 0.5 wt% or not greater than 0.1 wt% of the total weight of the first powder material. According to one embodiment, the first powder material can be essentially free of beta-phase silicon carbide. Reference herein to a composition that is essentially free of a given material will be understood to be reference to a composition that may include some trace or impurity contents of the given material.

In one particular embodiment, the first powder material is made of particles, and at least a portion of the particles can include an oxidation layer overlying at least a portion of the exterior surfaces of the particles. Without wishing to be tied to a particular theory, it is thought that the presence of the oxidation layer on the particles of the first powder material may facilitate suitable processing and formation of the bodies according to embodiments herein. The oxidation layer can include an oxide compound. In one embodiment, the oxidation layer may include silicon. For example, the oxidation layer may include silicon oxide, such as SiOx, wherein "x" has a value within a range between 1 and 3.

According to one embodiment, the oxidation layer may be present in a particular content relative to the total weight of the first powder material. For example, in at least one instance, the oxidation layer may be present in an average amount of at least 0.01 wt%, such as at least 0.05 wt% or at least 0.08 wt% or at least 0.1 wt% or at least 0.15 wt% or at least 0.2 wt% or at least 0.3 wt% or at least 0.5 wt%. Still, in another non-limiting example, the oxidation layer may be present in an amount of not greater than 1 wt%. It will be appreciated that the content of the oxidation layer relative to the total weight of the first powder material can be within a range including any of the minimum and maximum values noted above.

In at least one embodiment, the portion of the particles including the oxidation layer can include at least 10 wt% of the total weight of particles of the first powder material. In still other instances, the percentage of particles including the oxidation layer can be greater, such as at least 20 wt% or at least 30 wt% or at least 40 wt% or at least 50 wt% or at least 60 wt% or at least 70 wt% or at least 80 wt% or at least 90 wt% for the total weight of particles of the first powder material. In one particular embodiment, essentially all of the particles of the first powder material include the oxidation layer.

As noted herein, the blend of powder material includes a second powder material, which is distinct from the first powder. In certain instances, the second powder material can have a particular average particle size, which can be controlled to facilitate suitable processing and formation of the bodies according to the embodiments herein. For example, the second powder material can have an average particle size of not greater than 1 µm (micron), such as not greater than 0.9 µm (microns) or not greater than 0.8 µm (microns) or not greater than 0.7 µm (microns) or not greater than 0.6 µm (microns) or not greater than 0.5 µm (microns) or not greater than 0.4 µm (microns) or not greater than 0.3 µm (microns) or not greater than 0.2 µm (microns) or not greater than 0.1 µm (microns). Still, in one non-limiting embodiment, the second powder material can have an average particle size of at least 0.01 µm (microns), such as at least 0.05 µm (microns) or at least 0.08 µm (microns) or at least 0.1 µm (microns). It will be appreciated that the second powder material can have an average particle size within a range including any of the minimum and maximum values noted above.

According to another embodiment, the second powder material can have a particular maximum particle size, which may be controlled to facilitate suitable formation of a body having the features noted in the embodiments herein. For example, the second powder material can have a maximum particle size of not greater than 5 µm (microns), such as not greater than 4.8 µm (microns) or not greater than 4.5 µm (microns) or not greater than 4.2 µm (microns) or not greater than 4 µm (microns) or not greater than 3.8 µm (microns) or not greater than 3.5 µm (microns) or not greater than 3.2 µm (microns) or not greater than 3 µm (microns) or not greater than 2.8 µm (microns) or not greater than 2.5 µm (microns) or not greater than 2.2 µm (microns) or not greater than 2 µm (microns) or not greater than 1.8 µm (microns) or not greater than 1.5 µm (microns) or not greater than 1.2 µm (microns) or not greater than 1 µm (micron) or not greater than 0.9 µm (microns) or not greater than 0.8 µm (microns) or not greater than 0.7 µm (microns) or not greater than 0.6 µm (microns) or not greater than 0.5 µm (microns). Still, in one non-limiting embodiment, the second powder material can have a maximum particle size of at least 0. 1 µm (microns) or at least 0.2 µm (microns) or at least 0.3 µm (microns) or at least 0.4 µm (microns) or at least 0.5 µm (microns) or at least 0.6 µm (microns) or at least 0.7 µm (microns9 or at least 0.8 µm (microns) or at least 0.9 µm (microns) or at least 1 µm (micron). It will be appreciated that the second powder material can have a maximum particle size within a range including any of the minimum and maximum values noted above. The maximum particle size of the second powder material can be measured in the same manner used to measure the maximum particle size of the first powder material.

According to one aspect, the second powder material can include at least one material of the group aluminum, a rare earth element, alkaline earth element, transition metal oxide, or any combination thereof. In still other instances, the metal oxide of the second powder material can include silicon. For example, the metal oxide of the second powder material can include silica. According to one particular embodiment, the metal oxide of the second powder material can include an aluminosilicate. The composition of the second powder material can be controlled to facilitate suitable formation of a body having the features noted in the embodiments herein.

The metal oxide of the second powder material comprises at least 90 wt% alumina or at least 95 wt% alumina or at least 99 wt% alumina for the total weight of the second powder material. In at least one embodiment, the metal oxide of the second powder material may include only alumina, such that the metal oxide can consist essentially of alumina.

The blend of powder material is formed to include a particular content of the first powder material and the second powder material, which may facilitate suitable formation of a body having the features of the embodiments herein.

The blend includes a particular ratio (C1/C2), which is a ratio of the content (wt%) of the first powder material (C1) and the content (wt%) of the second powder material (C2). For example, the blend can have a ratio (C1/C2) of at least 14 or at least 16 or at least 18 or at least 20 or at least 22 or at least 24 or at least 26 or at least 28. Still, in another non-limiting embodiment, the ratio (C1/C2) can be not greater than 99, such as not greater than 97 or not greater than 95 or not greater than 93 or not greater than 90 or not greater than 88 or not greater than 85 or not greater than 82 or not greater than 80 or not greater than 75 or not greater than 70 or not greater than 65 or not greater than 60 or not greater than 55 or not greater than 50 or not greater than 45 or not greater than 40 or not greater than 35 or not greater than 30 or not greater than 28 or not greater than 26 or not greater than 24 or not greater than 22. It will be appreciated that the ratio (C1/C2) can be within a range including any of the minimum and maximum values noted above.

The blend of powder material is formed to include a particular content of the first powder material, which may facilitate suitable formation of a body having the features of the embodiments herein. The blend comprises at least 93 wt% or at least 94 wt% or at least 95 wt% or at least 96 wt% or at least 98 wt% of the first powder material for the total weight of the blend. The blend comprises not greater than 99 wt% of the first powder material for the total weight of the blend, such as not greater than 98 wt% or not greater than 97 wt% or not greater than 96 wt% or not greater than 95 wt% or not greater than 94 wt% of the first powder material for the total weight of the blend. It will be appreciated that the content of the first powder material can be within a range including any of the minimum and maximum percentages noted above.

The blend includes a particular content of the second powder material, which may facilitate formation of a body according to the embodiments herein. The blend includes at least 1 wt% of the second powder material for the total weight of the blend, such as at least 2 wt% or at least 3 wt% or at least 4 wt% or at least 5 wt% or at least 6 wt% of the second powder material for the total weight of the blend. The includes not greater than wt% or not greater than 6 wt% or not greater than 5 wt% or not greater than 4 wt% or not greater than 3 wt% or not greater than 2 wt% of the second powder material for the total weight of the blend. It will be appreciated that the content of the first powder material can be within a range including any of the minimum and maximum percentages noted above.

After obtaining the blend at step 101, the process can continue at step 103, which includes forming blended green particles. The process of forming blended green particles can include forming agglomerate particles from the blend of powder material, wherein each of the green particles includes a substantially homogenous mixture including the first and second powder materials. The content of the first and second powder materials in each of the blended green particles can correspond to the contents of the first and second powder materials in the blend. One suitable method for forming the blended green particles can include creating a slurry including the blend of powder material and a carrier material. The carrier material can be a liquid, which may be an organic or inorganic material. In one embodiment, the carrier material can be an aqueous-based material or an organic-based material. For example, one suitable carrier material can include water.

Certain additives may be added to the slurry, including for example, binders, stabilizers, surfactants, rheology modifiers, dispersants, and the like. Typical binders can include organic materials, such as polyvinyl alcohols (PVA), polyethylene glycol (PEG), latex, or any combination thereof. Such additives are typically present in minor amounts, such as less than 20 wt% for the total weight of the dry powder mixture (i.e., materials without the carrier material).

According to one particular embodiment, some suitable dispersants can include ammonia, ammonia derivatives, ammonium compounds of methacrylates and carboxylates, alkali hydroxides, or any combination thereof.

After forming the slurry, the process can include mixing the slurry to facilitate formation of a homogenous distribution of the first and second powder materials throughout the slurry. According to one embodiment, mixing may include milling, such as attrition milling or ball milling.

After sufficiently mixing the slurry, the process may continue by forming the slurry into the blended green particles. One particularly suitable process for converting the slurry to the blended green particles can include spray drying. The spray drying process can be conducted under conditions suitable to form blended green particles having a finely controlled particle size distribution. Some screening or sieving may be conducted on the blended green particles to produce particles having a controlled particle size distribution. In particular, it may be suitable to remove large particles, such as agglomerates of a certain size.

According to one embodiment, the blended green particles can have an average particle size of at least 20 µm (microns) and not greater than 200 µm (microns). For example, the average particle size of the blended green particles can be not greater than 180 µm (microns), such as not greater than 160 µm (microns) or not greater than 150 µm (microns) or not greater than 140 µm (microns) or not greater than 120 µm (microns) or not greater than 100 µm(microns) or not greater than 80 µm (microns) or not greater than 60 µm (microns) or not greater than 40 µm (microns). Still, in one non-limiting embodiment, the average particle size of the blended green particles can be at least 40 µm (microns) or at least 60 µm (microns) or at least 80 µm (microns) or at least 100 µm (microns) or at least 120 µm (microns). It will be appreciated that the average particle size of the blended green particles can be within a range including any of the minimum and maximum values noted above. The average particle size of the blended green particles can be measured in the same manner used to measure the average particle size of other powder materials as noted herein. For example, the average particle size can be the D50 value generated by suitable sampling and analysis of the particulate via a laser light scattering particle size analyzer.

Moreover, the blended green particles may have a maximum particle size of not greater than 200 µm (microns), such as not greater than 180 µm (microns), such as not greater than 160 µm (microns) or not greater than 150 µm (microns) or not greater than 140 µm (microns) or not greater than 120 µm (microns) or not greater than 100 µm (microns) or not greater than 80 µm (microns). Still, in one non-limiting embodiment, the maximum particle size of the blended green particles can be at least at least 60 µm (microns) or at least 80 µm (microns) or at least 100 µm (microns) or at least 120 µm (microns). It will be appreciated that the maximum particle size of the blended green particles can have a maximum particle size within a range including any of the minimum and maximum values noted above. The maximum particle size of the blended green particles can be measured in the same manner used to measure the average particle size of other powder materials as noted herein.

The process for forming the blended green particles may further include a drying process, wherein after forming the blended green particles, such particles undergo some drying to remove excess liquid and undesired volatile species.

After forming the blended green particles at step 103, the process can continue at step 105 by combining the blended green particle to form a green body. Reference herein to a green body is reference to an undensified or unsintered part. Some suitable processes for forming the green body can include pressing, punching, molding, casting, extruding, curing, or any combination thereof.

After forming the green body at step 105, the green body is sintered using heat treatment to densify and form the final body. In certain instances, the process for forming the green body and the sintering process can be combined. For example, in at least one embodiment, the blend of green particles can be placed in a mold of desired shape, and placed in a container for pressing and sintering, such that the finally-formed sintered body is formed in a single step. Still, other processes may form a green body first and conduct a separate sintering process after forming the green body The sintering includes a pressure-assisted sintering process, namely hot pressing (i.e., uniaxial pressing).

The sintering process includes hot pressing, which can be a uniaxial pressing operation, which includes the application of force at elevated temperatures to facilitate densification.

The hot pressing operation includes applying a particular sintering pressure, which is the maximum applied pressure on the body during the maximum sintering temperature. Control of the sintering pressure can facilitate formation of a body having the features of the embodiments herein. For example, the sintering pressure can be at least 13.78 MPa (2000 psi), such as at least 17.23 MPa (2500 psi) or at least 20.68 MPa (3000 psi). Still, in at least one non-limiting embodiment, the sintering pressure may be not greater than 34.47 MPa (5000 psi), such as not greater than 27.58 MPa (4000 psi) or not greater than 20.68 MPa (3000 psi). It will be appreciated that the sintering pressure can be within a range including any of the minimum and maximum values noted above.

In addition to controlling the sintering pressure, the duration of the applied pressure is also controlled to facilitate formation of a body having the features of the embodiments herein. The duration of the sintering pressure will be understood to be the duration of the maximum applied pressure at the maximum sintering temperature during hot pressing. The duration for application of the sintering pressure is 1 hour.

The process of hot pressing is conducted at a particular sintering temperature, which is the maximum sintering temperature used to form the finally-formed body. The sintering temperature is 2050°C.

The atmosphere during sintering may be controlled to facilitate suitable formation of the body having the features of the embodiments herein. For example, sintering may be conducted in an inert atmosphere, such as a noble gas. In one embodiment, sintering can be conducted in an atmosphere including argon, such that it may consist essentially of argon. In other instances, sintering may be conducted in an atmosphere containing normal atmospheric gases. In still another embodiment, the atmosphere during sintering may be a reducing atmosphere.

After conducting the sintering operation, the green body is converted to a finally-formed body. The body may be cooled from the sintering temperature using standard techniques. The finally-formed body can have one or more features of the embodiments herein as noted in the following.

The body can be formed into any shape suitable for the intended end use. For example, the body may be shaped in the form of an annulus or cylinder in the context of wear-resistant components. The body may have a length, width and height, wherein the length ≥ width ≥ height. The body can have a two-dimensional shape as defined by the plane of the length and width that may be a regular polygon, an irregular polygon, an irregular shape, a complex shape including a combination of linear and curved portions, and the like. Similarly, the body can have a two-dimensional shape as defined by the plane of the length and height that can be a regular polygon, an irregular polygon, an irregular shape, a complex shape including a combination of linear and curved portions, and the like. Moreover, the body can have a two-dimensional shape as defined by the plane of the width and height that can be a regular polygon, an irregular polygon, an irregular shape, a complex shape including a combination of linear and curved portions, and the like. The body can have any shape suitable for use in protective components which may be in the form of vehicle parts or body parts, cones (blasting cones), and the like. The body includes a first phase comprising silicon carbide and a second phase comprising a metal oxide. In at least one embodiment, the first phase can include alpha-phase silicon carbide, such as 6H alpha-phase silicon carbide. For at least one embodiment, at least 98% of the first phase can include alpha-phase silicon carbide. In a more particular embodiment, the first phase of the body can consist essentially of alpha-phase silicon carbide. In certain instances, the first phase can be essentially free of beta-phase silicon carbide. In at least one embodiment, the body may include not greater than 0.1 wt% beta-phase silicon carbide for the total weight of the body.

Certain embodiments may include a body having a particular content of the first phase, which may facilitate certain properties and/or performance of the body. For example, the body can include at least 70 wt% of the first phase for the total weight of the body. In other instances, the amount of the first phase within the body can be greater, such as at least 75 wt% or at least 80 wt% or at least 85 wt% or at least 90 wt% or at least 92 wt% or at least 93 wt% or at least 94 wt% or at least 95 wt% or at least 96 wt% for the total weight of the body. In one non-limiting embodiment, the body can include not greater than 99 wt% of the first phase for the total weight of the body, such as not greater than 98 wt% or not greater than 97 wt% or not greater than 96 wt% or not greater than 95 wt% or not greater than 94 wt% or not greater than 93 wt% or not greater than 92 wt% or not greater than 91 wt% of the first phase for the total weight of the body. It will be appreciated that the amount of the first phase within the body can be within a range including any of the minimum and maximum values noted above.

The body is formed to have a particular average grain size of the first phase, which may facilitate certain properties and/or performance of the body. The first phase has an average grain size of not greater than 2 µm (microns) as measured according to the intercept method. In other embodiments, the average grain size of the first phase can be less, such as not greater than 1.8 µm (microns) or not greater than 1.5 µm (microns) or not greater than 1.3 µm (microns) or not greater than 1 µm (micron) or not greater than 0.8 µm (microns) or not greater than 0.5 µm (microns). Still, in one non-limiting embodiment, the first phase can have an average grain size of at least 0.1 µm (microns), such as at least 0.2 µm (microns) or at least 0.4 µm (microns) or at least 0.6 µm (microns) or at least 0.8 µm (microns) or at least 1 µm (micron). It will be appreciated that the average grain size of the first phase can be within a range including any of the minimum and maximum values noted above.

The average grain size (i.e., average crystallite size) is measured based on the intercept method using scanning electron microscope (SEM) photomicrographs. Samples are mounted in epoxy resin then polished with diamond polishing slurry using a polishing unit. The polished samples are mounted on the SEM mount then gold coated for SEM preparation.

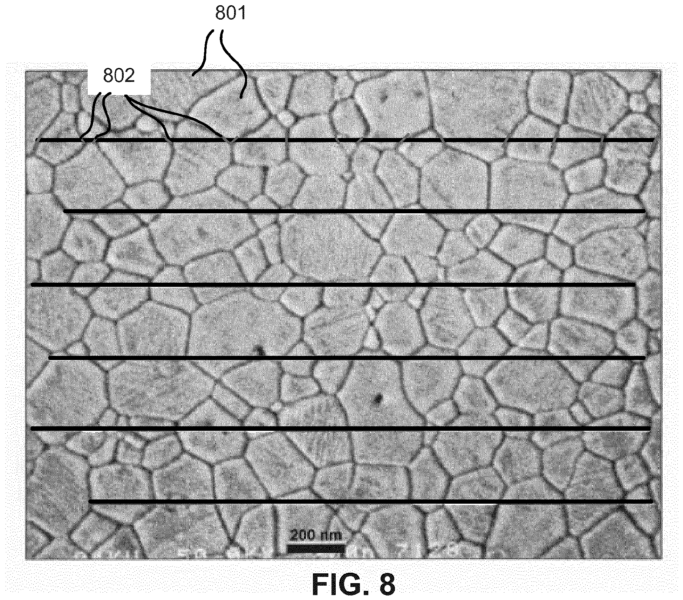

SEM photomicrographs of three or more individual samples are taken at a reasonable magnification to clearly resolve the microstructure and grains in each of the samples. Each of the SEM photomicrographs are analyzed according to the following technique: 1) 6 horizontal lines are drawn across the image, excluding black data band at bottom of photomicrographs (See, FIG. 8) 2) For each of the 6 horizontal lines, the points at which each of the lines crosses a grain boundary of the grains 801, such as points 802, are marked, and two immediately adjacent points 802 define a line segment of the horizontal line; 3) an imaging program or a program within imaging software, such as ImageJ, is used to measure the line segment lengths for each of the lines segments in each of the 6 horizontal lines; 4) in the case of pores or other defects, such feature are excluded from measurements; 5) the data is then tabulated and placed in a spreadsheet or other program to analyze the average grain size (D50), which is the average line segment length for all of the samples evaluate. It will be appreciated that such measurements may also be used to determine the maximum grain size, which can be the D100 or largest measured grain size from the analysis.

Additionally, the body is formed to have a particular maximum grain size, which may facilitate certain properties and/or performance of the body. The first phase has a maximum grain size of not greater than 10 µm (microns), such as not greater than 9 µm (microns) or not greater than 8 µm (microns) or not greater than 7 µm (microns) or not greater than 6 µm(microns) or not greater than 5 µm (microns) or not greater than 4 µm (microns) or not greater than 3 µm (microns) or not greater than or not greater than 2.5 µm (microns) or not greater than 2 µm (microns) or not greater than 1.5 µm (microns) or not greater than 1 µm (micron). In one non-limiting embodiment, the first phase can have a maximum grain size of at least 0.51 µm (microns) or at least 0.6 µm (microns) or at least 0.7 µm (microns) or at least 0.8 µm (microns) or at least 0.9 µm (microns9 or at least 1 µm (micron) or at 1.2 µm (microns) or at least 1.4 µm (micron) or at least 1.5 µm (microns) or at least 1.6 µm (microns) or at least 1.8 µm (microns) or at least 2 µm (microns). It will be appreciated that the maximum grain size of the first phase can be within a range including any of the minimum and maximum values noted above. The maximum grain size can be measured using the same technique used to measure average grain size, but the value is based on the largest line segment length measured.

As noted herein, the body includes a second phase that is distinct from the first phase. The second phase includes a different material and is positioned in a different region of the body compared to the first phase. The second phase includes a metal oxide, and more particularly, may include at least one composition such as aluminum, a rare earth element, alkaline earth element, transition metal oxide, or any combination thereof. In certain instances, the content and composition of the metal oxide material may facilitate suitable processing (e.g., sintering) and formation of a second phase located at certain regions within the body. In at least one embodiment, the metal oxide of the second phase can include alumina. In one embodiment, the second phase can consist essentially of alumina.

The metal oxide of the second phase may have a particular structure, which may facilitate certain properties and/or performance of the body. For example, the first phase may be at least one of a crystalline phase (e.g., polycrystalline), or a combination thereof. In at least one embodiment, the first phase may consist essentially of a crystalline phase. In another embodiment, the first phase may consist essentially of an amorphous phase. For yet another aspect, the first phase may include some amorphous phase and crystalline phases.

The amorphous phase and crystalline phase may include the same composition of metal oxide, such as aluminum and silicon, or more particularly an alumina-based phase. For example, in certain instances, the metal oxide of the second phase comprises aluminum and silicon and the second phase comprises a first portion including a crystalline phase and a second portion comprising an amorphous phase, both including the aluminum and silicon. In at least one embodiment, the second phase consists essentially of crystalline (e.g., polycrystalline) alumina, including only impurity contents of any other materials. Trace or impurity contents do not materially affect the properties of the material, and may be present in contents not greater than 0.1 wt% or not greater than 0.05 wt% or not greater than 0.01 wt% for the total weight of the material. The same definitions apply to any other materials described herein as consisting essentially of a material, such that the object contains only that material and only trace amounts or impurity contents of other species.

In at least one aspect, the metal oxide of the second phase can include a particular content of alumina (Al₂O₃). For example, the metal oxide of the second phase can include at least 50 wt% alumina, such as at least 60 wt% alumina or at least 70 wt% alumina or at least 80 wt% alumina or at least 90 wt% alumina or at least 95 wt% alumina or even at least 99 wt% alumina. In at least one embodiment, the metal oxide of the second phase can consist essentially of alumina. Still, in one non-limiting embodiment, the metal oxide of the second phase may include not greater than 99.5 wt% alumina, such as not greater than 99 wt% or not greater than 98 wt% or even not greater than 97 wt%. It will be appreciated that the content of alumina in the metal oxide of the second phase can be within a range including any of the minimum and maximum percentages noted above.

In certain instances, some materials may be intentionally excluded from the second phase. Accordingly, it is within the scope of at least one embodiment to form a body, wherein the metal oxide of the second phase is essentially free of alkali elements, alkaline earth elements, transition metal elements, rare earth elements (including yttrium and lanthanum) or any combination thereof.

The body may be formed to include a certain content of the second phase, which may facilitate improved properties and/or performance. For example, the body may include at least 1 wt% of the second phase for the total weight of the body, such as at least 2 wt% or at least 3 wt% or at least 4 wt% or at least 5 wt% or at least 6 wt% or at least 7 wt% or at least 8 wt% or at least 9 wt% of the second phase for the total weight of the body. In one non-limiting embodiment, the body may include not greater than 10 wt% of the second phase for the total weight of the body, such as not greater than 9 wt% or not greater than 8 wt% or not greater than 7 wt% or not greater than 6 wt% or not greater than 5 wt% or not greater than 4 wt% or not greater than 3 wt% or not greater than 2 wt% of the second phase for the total weight of the body. It will be appreciated that the content of the second phase within the body can be within a range including any of the minimum and maximum percentages noted above.

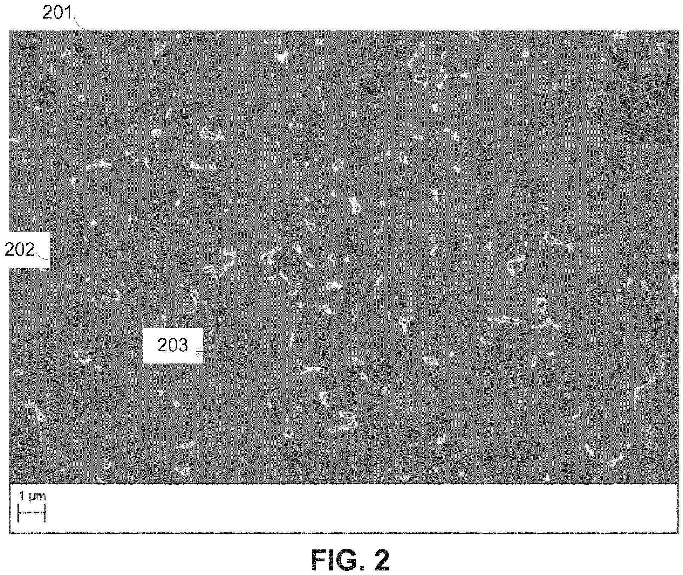

The second phase is located within specific regions of the body and defines a particular microstructure and morphology. FIG. 2 includes a scanning electron microscope (SEM) image at a magnification of approximately for a portion of a body according to an embodiment. As depicted in FIG. 2, the body 201 includes a first phase 202 and a second phase 203. The second phase 203 is depicted by the discrete white regions between the regions of the first phase 202, wherein the first phase 202 is depicted as the matrix material having a grey color. The second phase is a discrete intergranular phase located at the grain boundaries of the first phase. A majority of the second phase 203 within the body 201 is located at triple boundary regions between three or more grains of the first phase 202. For example, according to one embodiment, at least 55% of the second phase 203 can be located at triple boundary regions between three or more grains of the first phase 202, such as at least 60% or at least 70% or at least 80% or at least 90% or at least 95% of the second phase 203 can be located at triple boundary regions between three or more grains of the first phase 202. In still more particular instances, essentially all of the second phase 203 can be located at triple boundary regions between three or more grains of the first phase 202. Still, in one non-limiting embodiment, not greater than 99% of the second phase 203 may be located at triple boundary regions between three or more grains of the first phase 202.

The body is formed to have a particular microstructure that facilitates certain properties of the body as described in the embodiments herein. Notably, the microstructure has a particular content, distribution and/or size associated with the second phase, which may facilitate the properties of the embodiments herein. The body has a second phase count index of at least 1000/100 µm (microns) of image width, based on a the SEM image having a total of 100 µm (microns). In still another case such as at least 1100/100 µm (microns) image width or at least 1200/100 µm (microns) image width or at least 1300/100 µm (microns) of image width or at least 1400/100 µm (microns) of image width or at least 1500/100 µm (microns) of image width or at least 1600/100 µm (microns) of image width or at least 1700/100 µm (microns) of image width or at least 1800/100 µm (microns) of image width or at least 1900/100 µm (microns) of image width or at least 2000/100 µm (microns) of image width or at least 2100/100 µm (microns) of image width or at least 2200/100 µm (microns) of image width or at least 2300/100 µm (microns) of image width or at least 2400/100 µm (microns) of image width. Still, in another non-limiting embodiment, the body can have a second phase count index of not greater than 4000/100 µm (microns) of image width, such as not greater than 3900/100 µm (microns) of image width or not greater than 3800/100 µm (microns) of image width or not greater than 3700/100 µm (microns) of image width or not greater than 3600/100 µm (microns) of image width or not greater than 3500/100 µm (microns) of image width or not greater than 3400/100 µm (microns) of image width or not greater than 3300/100 µm (microns) of image width or not greater than 3200/100 µm (microns) of image width or not greater than 3100/100 µm (microns) of image width or not greater than 3000/100 µm (microns) of image width or not greater than 2900/100 µm (microns) of image width or not greater than 2800/100 µm (microns) of image width or not greater than 2700/100 µm (microns) of image width or not greater than 2600/100 µm (microns) of image width or not greater than 2500/100 µm (microns) of image width. It will be appreciated that the body can have a second phase count index within a range including any of the minimum and maximum values noted above, including for example, within a range of at least 1000/100 µm (microns) of image width and not greater than 4000/100 µm (microns) of image width, such as within a range including at least 1500/100 µm (microns) of image width and not greater than 3000/100 µm (microns) of image width, such as within a range including at least 2000/100 µm (microns) of image width and not greater than 2500/100 µm (microns) of image width.

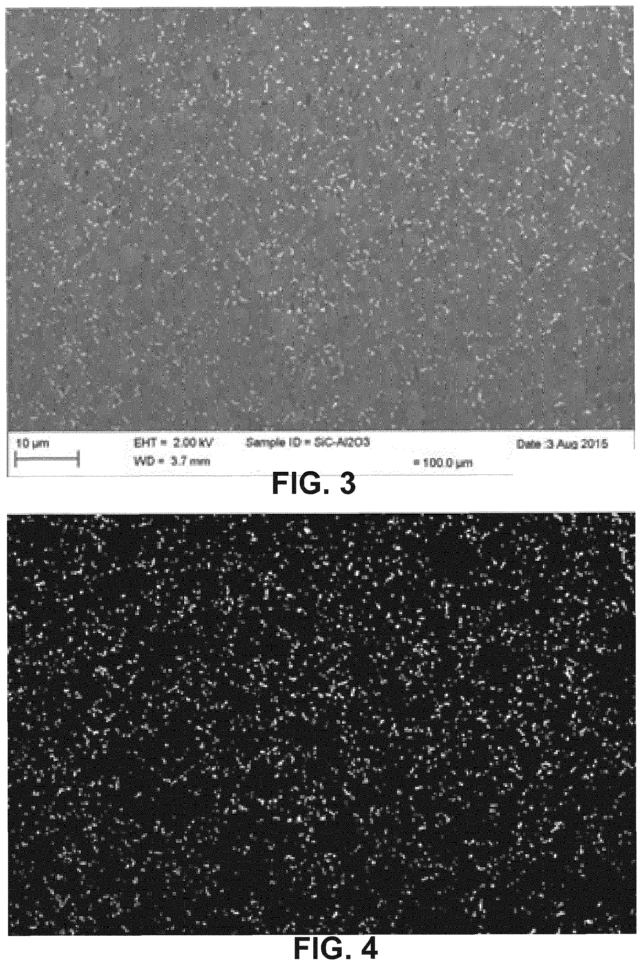

The second phase count index can be measured by sectioning a sample of a material and viewing the sample using a Zeiss Merlin SEM, at a voltage of 2.0 kV, with a working distance between 3-7 mm, to create images of the microstructure for analysis. The image characteristics include an image width of 100 µm (microns) and a resolution of 1024 pixels x 768 pixels. The image is taken in a manner maximize the contrast between the first phase (e.g., SiC-containing grains) and the second phase material (e.g., alumina), such that the grains of the first phase are darker than the second phase. FIG. 3 provides a gray scale image of a suitable SEM micrograph. Using suitable image analysis software, such as ImageJ 1.48v available from NIH, crop the image to remove any labels, and adjust the image to increase the brightness of the second phase to facilitate selection of only the white material associated with the second phase. Use the image analysis software to change the image to a binary image (i.e., black and white). See, for example, FIG. 4. Using analysis software, such as Image J, quantify the image statistics using the following approach: Step 1) using Analyze process in ImageJ; step 2) use "Analyze Particles" in ImageJ, and use settings as size (pizel^2): 0-infinity and circularity: 0-1; step 3) compare calculated area from output. It will be appreciated that multiple images of randomly selected portions of the microstructure can be analyzed. For example, the microstructural values provided herein can be calculated from at least 3 different SEM images of randomly selected portions of a sample.

In yet another embodiment, the body can have a second phase average area index of at least 2000 pixels/100 µm (microns) image width, based on a SEM image of 100 µm (microns) in total width and using the resolution noted above. The second phase average area index can be analyzed in the same manner using one or more SEM images taken according to the details provided above. In another embodiment, the second phase average area index can be at least 2500 pixels/100 µm (microns) image width or at least 3000 pixels/100 µm (microns) image width or at least 3500 pixels/100 µm (microns) image width or at least 4000 pixels/100 µm (microns) image width or at least 4500 pixels/100 µm (microns) image width or at least 5000 pixels/100 µm (microns) image width or at least 5500 pixels/100 µm (microns) image width or at least 6000 pixels/100 µm (microns) image width or at least 6500 pixels/100 µm (microns) image width or at least 3000 pixels/100 µm (microns) image width or at least 3500 pixels/100 µm (microns) image width or at least 4000 pixels/100 µm (microns) image width or at least 4500 pixels/100 µm (microns) image width or at least 5000 pixels/100 µm (microns) image width or at least 5500 pixels/100 µm (microns) image width or at least 6000 pixels/100 µm (microns) image width or at least 6500 pixels/100 µm (microns) image width or at least 7000 pixels/100 µm (microns) image width or at least 7500 pixels/100 µm (microns) image width or at least 8000 pixels/100 µm (microns) image width or at least 8500 pixels/100 µm (microns) image width or at least 9000 pixels/100 µm (microns) image width or at least 9500 pixels/100 µm (microns) image width or at least 10000 pixels/100 µm (microns) image width. Still, in one non-limiting embodiment, the body can have a second phase average area index of not greater than 30000 pixels/100 µm (microns) image width, such as not greater than 28000 pixels/100 µm (microns) image width or not greater than 25000 pixels/100 µm (microns) image width or not greater than 22000 pixels/100 µm (microns) image width or not greater than 20000 pixels/100 µm (microns) image width or not greater than 18000 pixels/100 µm (microns) image width or not greater than 15000 pixels/100 µm (microns) image width or not greater than 14000 pixels/100 µm (microns) image width or not greater than 13000 pixels/100 µm (microns) image width or not greater than 12000 pixels/100 µm (microns) image width or not greater than 11000 pixels/100 µm (microns) image width. It will be appreciated that the second phase average area index can be within a range including any of the minimum and maximum values noted above, including for example, within a range including at least 2000 pixels/100 µm (microns) image width and not greater than 30000 pixels/100 µm (microns) image width, such as within a range including at least 7000 pixels/100 µm (microns) image width and not greater than 20000 pixels/100 µm (microns) image width or within a range including at least 9000 pixels/100 µm (microns) image width and not greater than 15000 pixels/100 µm (microns) image width.

In still another embodiment, the microstructure of the body can be defined by a second phase average size index (pixels²), which defines the average size of the second phase regions based on the SEM image taken to evaluate the second phase count index, except that the image is analyzed using Image J using the same process as noted above for the previous two parameters. A particular second phase average size index can facilitate certain properties of the body. In one embodiment, the body can have a second phase average size index of at least 3.00 pixels², such as at least 3.10 pixels² or at least or at least 3.20 pixels² or at least 3.25 pixels² or at least 3.30 pixels² or at least 3.35 pixels² or at least 3.40 pixels² or at least 3.45 pixels² or at least 3.50 pixels² or at least 3.55 pixels² or at least 3.60 pixels² or at least 3.65 pixels² or at least 3.70 pixels² or at least 3.75 pixels² or at least 3.80 pixels² or at least 3.85 pixels² or at least 3.90 pixels² or at least 3.95 pixels² or at least 4.00 pixels² or at least 4.05 pixels² or at least 4.10 pixels² or at least 4.15 pixels² or at least 4.20 pixels² or at least 4.25 pixels² or at least 4.30 pixels² or at least 4.35 pixels². Still, in one non-limiting embodiment, the second average size index can be not greater than 10.00 pixels², such as not greater than 9.00 pixels² or not greater than 8.00 pixels² or not greater than 7.00 pixels² or not greater than 6.00 pixels² or not greater than 5.75 pixels² or not greater than 5.50 pixels² or not greater than 5.25 pixels² or not greater than 5.00 pixels² or not greater than 4.95 pixels² or not greater than 4.90 pixels² or not greater than 4.85 pixels² or not greater than 4.80 pixels² or not greater than 4.75 pixels² or not greater than 4.70 pixels². It will be appreciated that the second phase average size index can be within a range including any of the minimum and maximum values noted above, including for example, within a range including at least 3.00 pixels² and not greater than 10.00 pixels², such as within a range including at least 3.50 pixels² and not greater than 8.00 pixels² or within a range including at least 4.00 pixels² and not greater than 7.00 pixels².

The body may be formed to be a particularly dense body, which may facilitate certain properties and/or performance. For example, the body may be formed to have at least 90% of theoretical density, such as at least 95% of theoretical density or at least 96% of theoretical density or at least 97% of theoretical density or at least 98% of theoretical density or at least 99% of theoretical density.

In more particular terms, the body may be formed to have a particular value of density, such as at least 2.8 g/cm³ or at least 2.9 g/cm³ or at least 3.0 g/cm³ or at least 3.1 g/cm³ or at least 3.2 g/cm³ or at least 3.3 g/cm³. In one non-limiting embodiment, the body can have a density of not greater than 3.5 g/cm³ or not greater than 3.4 g/cm³ or not greater than 3.3 g/cm³ or not greater than 3.2 g/cm³ or not greater than 3.1 g/cm³ or not greater than 3.0 g/cm³. It will be appreciated that the density of the body can be within a range including any of the minimum and maximum values noted above. Moreover, the density of the body may be some indication of the morphology of the second phase. For example, bodies having an interconnected second phase may have a greater density as compared to those bodies having a discrete second phase that is located in certain regions in the body as described in the embodiments herein.

The body is formed such that it has a particularly improved strength relative to conventional silicon carbide-containing bodies. The body has an average strength of at least 700 MPa, such as at least 725 MPa or at least 750 MPa or at least 775 MPa or at least 800 MPa or at least 825 MPa or at least 850 MPa or at least 875 MPa or at least 900 MPa or at least 925 MPa or at least 950 MPa or at least 975 MPa or at least 1000 MPa or at least 1025 MPa or at least 1050 MPa or at least 1075 MPa or at least 1100 MPa or at least 1125 MPa or at least 1150 MPa or at least 1175 MPa or at least 1200 MPa. In still another non-limiting embodiment, the body can have an average strength of not greater than 1200 MPa, such as not greater than 1175 MPa or not greater than 1150 MPa or not greater than 1125 MPa or not greater than 1100 MPa or not greater than 1075 MPa or not greater than 1050 MPa or not greater than 1025 MPa or not greater than 1000 MPa or not greater than 975 MPa or not greater than 950 MPa or not greater than 925 MPa or not greater than 900 MPa or not greater than 875 MPa or not greater than 850 MPa or not greater than 825 MPa or not greater than 800 MPa or not greater than 775 MPa or not greater than 750 MPa or not greater than 725 MPa. It will be appreciated that the body can have an average strength within a range including any of the minimum and maximum values noted above. The strength of the body can be a flexural strength according to a four-point bend test, using configuration B, as defined in ASTM C1161-02C. The average value may be generated by random sampling of bodies from a statistically relevant sample size.

In yet another aspect, the body can have a particular wear value that facilitates the use of the body in wear-resistant applications. For example, the body may have an average wear value of not greater than 1.0 cc, such as not greater than 0.8 cc or not greater than 0.6 cc or not greater than 0.4 cc or not greater than 0.2 cc or not greater than 0.1 cc or not greater than 0.08 cc or not greater than 0.06 cc or not greater than 0.05 cc or not greater than 0.04 cc. Still, in at least one non-limiting embodiment, the body can have an average wear value of at least 0.0001 cc or at least 0.0005 cc or at least 0.001 cc or at least 0.005 cc. It will be appreciated that the body can have an average wear value within a range including any of the minimum and maximum values noted above. The wear value is determined according to ASTM C074/C704 M-15. The average value may be generated by random sampling of bodies from a statistically relevant sample size.

In yet another embodiment, the body may have a particular fracture toughness that facilitates the use of body in certain applications. For example, the body can have an average fracture toughness of at least 3.7 MPa m^{1/2}, such as at least 3.8 MPa m^{1/2} or at least 3.9 MPa m^{1/2} or at least 4.0 MPa m^{1/2} or at least 4.1 MPa m^{1/2} or at least 4.2 MPa m^{1/2} or at least 4.3 MPa m^{1/2} or at least 4.4 MPa m^{1/2} or at least 4.5 MPa m^{1/2} or at least 4.6 MPa m^{1/2} or at least 4.7 MPa m^{1/2} or at least 4.8 MPa m^{1/2} or at least 4.9 MPa m^{1/2} or at least 5 MPa m^{1/2}. Still, in one non-limiting embodiment, the average fracture toughness of the body can be not greater than 7 MPa m^{1/2}, such as not greater than 6.7 MPa m^{1/2} or not greater than 6.3 MPa m^{1/2} or not greater than 6.0 MPa m^{1/2} or not greater than 5.8 MPa m^{1/2} or not greater than 5.5 MPa m^{1/2}. The fracture toughness can be measured by Vickers indentation test using a 1 kg load. The average value may be generated by random sampling of bodies from a statistically relevant sample size. Fracture toughness is measured using the Standard Test Method for measurement of fracture toughness, 2008 and ASTM C 1327-99 at room temperature and using a 1 kg load.

The body may be formed such that it has a particular hardness relative to conventional silicon carbide-containing bodies. For example, the body can have an average hardness (HV_{0.1kg}) of at least 20 GPa, such as at least 22 GPa or at least 23 GPa or at least 24 GPa or at least 25 GPa or at least 26 GPa or at least 27GPa or at least 28 GPa or at least 29 GPa or at least 30 GPa. In still another non-limiting embodiment, the body can have an average hardness of not greater than 40 GPa, such as not greater than 38 GPa or not greater than 36 GPa or not greater than 34 GPa or not greater than 32 GPa or not greater than 30 GPa. It will be appreciated that the body can have an average hardness within a range including any of the minimum and maximum values noted above. The hardness of the body can be measured according to the Vickers hardness test using a 1 kg load. The average value may be generated by random sampling of bodies from a statistically relevant sample size. The hardness is measured according to normalized standards hardness test ASTM E1820 - 09el.

Many different aspects and embodiments are possible. Some of those aspects and embodiments are described herein. After reading this specification, skilled artisans will appreciate that those aspects and embodiments are only illustrative and do not limit the scope of the present invention.

### Example

A series of samples were made using the following process. A first powder material was obtained, which was primarily alpha silicon carbide having an average particle size of 0.6 µm, commercially available as Sintex13 from Saint-Gobain. The silicon carbide powder included some content of an oxidation film comprising silicon and oxygen present on at least a portion of the surface of the first powder material. A second powder material was blended with the first powder material. The second powder material was alpha alumina having an average particle size between 100-200 nm, commercially available as AKP53 from Sumitomo Corporation. The blend included 96 wt% of the first powder material and 4 wt% of the second powder material.

The blend was mixed in an acoustic mixer using 82 wt% DI water, SiC media, 3.33wt% PVA (21% sol), 1wt% PEG400 (Carbowax400), and 0.7wt% TEA (all percentages are relative to the SiC).

After mixing the blend, the material was spray dried on a Yamato DL410 spray-dryer. The spray dried particles were screened through a 100 µm (micron) mesh, such that the blended green particles had an average particle size of approximately 50 to 60 microns and a maximum particle size of approximately 100 microns.

After forming and sieving the blended green particles, the particles are placed in a mold of a desired size and shape and subject to a hot pressing operation. Hot pressing is conducted at a sintering pressure of approximately 20.7 MPA (approximately 3000 psi) on a 25.8 cm² (4 in²) sample at a sintering temperature of 1950°C-2050°C, for a duration of 0.5 hours or 1 hour, depending upon the sample. Sintering is conducted in an inert atmosphere to form the finally-formed body. Hot pressing is a uniaxial pressing operation conducted on a GCA machine, commercially available from TFS Technologies. Table 1 provides the sintering temperatures, sintering duration, average strength and standard deviation of the strength values for the samples S1 to S8. Samples S1-S5, S7 and S8 are not according to the invention, sample S6 is according to the invention.

**Table 1**

| Sample ID | Sintering Temp. (°C) | Sintering Duration (hrs.) | Average Strength (MPa) | Std. Dev. |
|---|---|---|---|---|
| S1 | 1950 | 0.5 | 363 | 15 |
| S2 | 1950 | 1 | 370 | 22 |
| S3 | 2000 | 0.5 | 424 | 19 |
| S4 | 2000 | 1 | 532 | 42 |
| S5 | 2050 | 0.5 | 560 | 15 |
| S6 | 2050 | 1 | 729 | 32 |
| S7 | 2100 | 0.5 | 561 | 53 |
| S8 | 2100 | 1 | 612 | 63 |

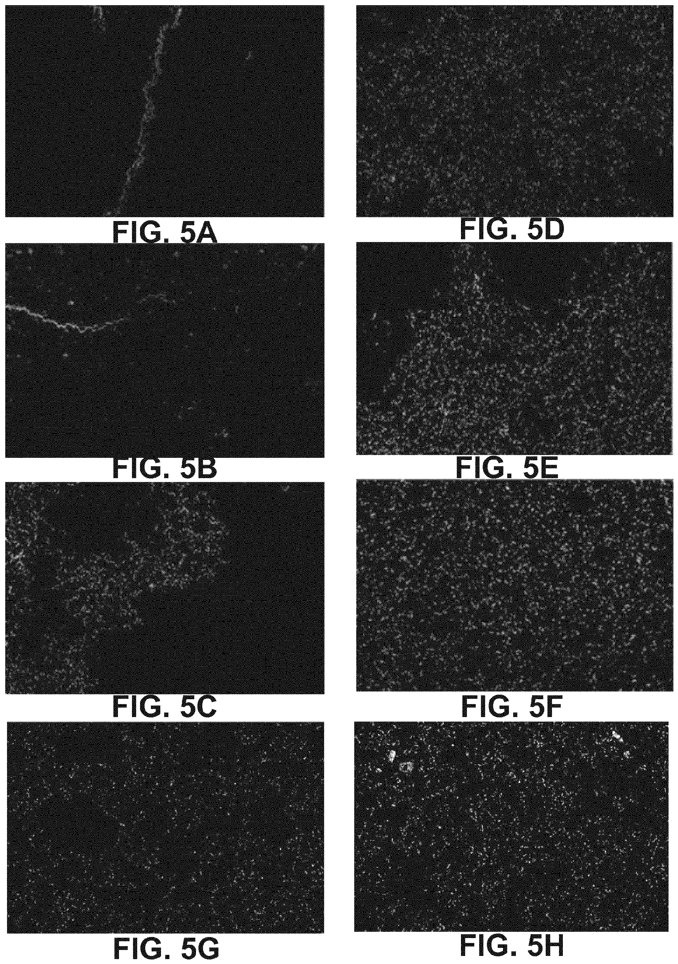

FIGs. 5A-5H include cross-sectional SEM images taken of samples S1-S8, respectively.

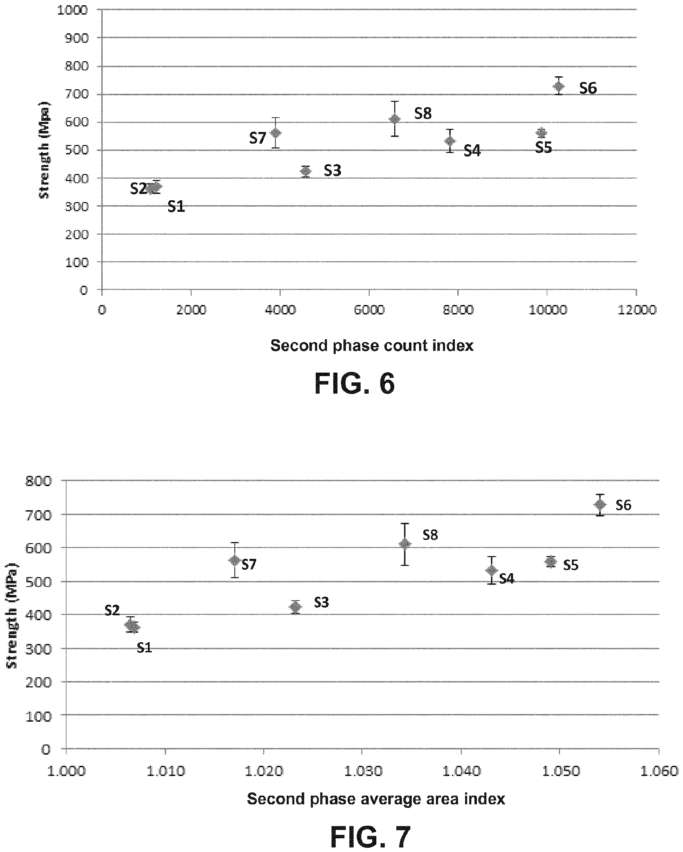

FIG. 6 includes a plot of second phase count index factor versus strength for samples S1-S8. FIG. 7 includes a plot of second phase average area index versus strength for samples S1-S8.

Sample S1 had an average grain size of approximately 1.10 µm (microns) and a maximum grain size of approximately 3.86 µm (microns). The body included approximately 96 wt% of a first phase including silicon carbide and approximately 4 wt% of the second phase. The density of the body was 98-99% theoretical density.

Sample S2 had an average grain size of approximately 1.15 µm (microns) and a maximum grain size of approximately 4.4 µm (microns). The body included approximately 96 wt% of a first phase including silicon carbide and approximately 4 wt% of the second phase. The density of the body was 98-99% theoretical density.

Sample S3 had an average grain size of approximately 1.15 µm (microns) and a maximum grain size of approximately 4.4 µm (microns). The body included approximately 96 wt% of a first phase including silicon carbide and approximately 4 wt% of the second phase. The density of the body was 98-99% theoretical density.

Sample S4 had an average grain size of approximately 1.27 µm (microns) and a maximum grain size of approximately 4.71 µm (microns). The body included approximately 96 wt% of a first phase including silicon carbide and approximately 4 wt% of the second phase. The density of the body was 98-99% theoretical density.

Sample S5 had an average grain size of approximately 1.41 µm (microns) and a maximum grain size of approximately 5.84 µm (microns). The body included approximately 96 wt% of a first phase including silicon carbide and approximately 4 wt% of the second phase. The density of the body was 98-99% theoretical density.

Sample S6 had an average grain size of approximately 1.10 µm (microns) and a maximum grain size of approximately 4 µm (microns). The body included approximately 96 wt% of a first phase including silicon carbide and approximately 4 wt% of the second phase. The density of the body was 98-99% theoretical density, an average strength of approximately 440 MPa, an average wear value of 0.04 cc, and an average toughness of approximately 4.6 MPa m^{1/2}.

Sample S7 had an average grain size of approximately 1.09 µm (microns) and a maximum grain size of approximately 4.35 µm (microns). The body included approximately 96 wt% of a first phase including silicon carbide and approximately 4 wt% of the second phase. The density of the body was 98-99% theoretical density.

Sample S8 had an average grain size of approximately 1.29 µm (microns) and a maximum grain size of approximately 7.79 µm (microns). The body included approximately 96 wt% of a first phase including silicon carbide and approximately 4 wt% of the second phase. The density of the body was 98-99% theoretical density.

Certain prior art has disclosed that silicon carbide bodies with some content of metal oxide may be formed using conventional techniques to form bodies having conventional microstructures. See for example, Singhal and Lange, "Effect of Alumina Content on the Oxidation of Hot-Pressed Silicon Carbide" Metallurgy and Metals Processing. Pp. 433-435.

See also, Lange, "Hot-pressing behavior of Silicon Carbide powders with additions of Aluminum Oxide." Journal of Materials Science. Vol. 10, 1975. See also, Suzuki. "Improvement in the oxidation resistance of liquid phase sintered silicon carbide with aluminum oxide additions." Ceramics International. Vol. 31, 2005. However, the foregoing embodiments are believed to be distinct from such conventional processes and articles. First, it has been noted and is surprising that the bodies of the present embodiments are capable of being formed to have a particular microstructure using significantly less sintering pressure at the sintering duration compared to conventional techniques. Moreover, without wishing to be tied to a particular theory, it is thought that the combination of processing parameters facilitates formation of a body having the combination of features of the embodiments herein. Notably, the bodies of the embodiments herein can be processes in a particular manner to create a unique microstructure, which may also facilitate one or more unique properties of the bodies.

## Claims

1. A body (201) comprising:
a first phase (202) comprising silicon carbide;
a second phase (203) comprising a metal oxide, wherein the second phase (203) is a discrete intergranular phase located at the grain boundaries of the first phase (202);
wherein a majority of the second phase (203) within the body (201) is located at triple boundary regions between three or more grains of the first phase (202);
wherein the first phase (202) has an average grain size of not greater than 2 µm (microns), as determined by the intercept method using scanning electron microscope (SEM) photomicrographs, as described in the description,
wherein the first phase (202) has a maximum grain size of not greater than 10 µm (microns), using the same technique used to measure average grain size, but the value is based on the largest line segment length measured,
wherein the body (201) comprises a second phase count index of at least 1000/100 µm (microns) of image width, based on a SEM image having a total width of 100 microns, and
wherein the body (201) comprises an average flexural strength of at least 700 MPa determined according to the four point bend test using configuration B of ASTM C1161-02C.

2. The body (201) of claim 1, wherein the body (201) comprises at least 70 wt% and not greater than 99 wt% of the first phase (202) for the total weight of the body, and wherein the first phase (202) comprises alpha-phase silicon carbide.

3. The body (201) of claim 1, wherein the body (201) comprises at least 1 wt% and not greater than 10 wt% of the second phase (203) for the total weight of the body (201), and wherein the metal oxide of the second phase (203) comprises aluminum and silicon.

4. The body (201) of claim 1, wherein the body (201) comprises an average flexural strength of at least 700 MPa and not greater than 1200 MPa.

5. The body (201) of claim 1, wherein the second phase count index is at least 1100/100 µm (microns) of image width and not greater than 4000/100 µm (microns) of image width based on a SEM image having a total of 100 µm (microns).

6. The body (201) of claim 1, wherein the second phase average area index is at least 2500 pixels/100 µm (microns) of image width and not greater than 30000 pixels/100 µm (microns) of image width based on a SEM image having a total width of 100 µm (microns).

7. The body (201) of claim 1, wherein the second phase average size index is at least 3.10 pixels² and not greater than 10.00 pixels².

8. The body (201) of claim 1, wherein the body (201) comprises at least one of:
a second phase count index within a range of at least 1000/100 µm (microns) image width and not greater than 4000/100 µm (microns) image width based on a SEM image having a total of 100 µm (microns);
a second phase average area index within a range of at least 2000 pixels/100 µm (microns) image width and not greater than 30000 pixels/100 µm (microns) image width based on a SEM image having a total of 100 µm (microns);
a second phase average size index within a range of at least 3.00 pixels² and not greater than 10.00 pixels²;
or any combination thereof.

9. The body (201) of claim 1, wherein the body (201) comprises an average wear value determined according to ASTM CO74/CO704 M-15 within a range including at least 0.0001 cm³and not greater than 0.1 cm³, and further wherein the body (201) comprises an average fracture toughness at least 3.7 MPa m^{1/2} and not greater than 7 MPa m^{1/2}, determined as described in the description, and further wherein the body comprises an average hardness (HV_{0.1kg}) of at least 20 GPa and not greater than 40 GPa, determined as described in the description.

10. A method of forming a body (201) comprising:
obtaining a blend of powder material comprising:
the blend comprising at least 93 wt% of a first powder material, the first powder material comprising at least 99 wt% of alpha phase silicon carbide; and
a second powder material comprising at least 90 wt% alumina, the second powder material being present in an amount of at least 1 wt% and not more than 7 wt% of the blend; and
sintering the blend of powder material to form a body comprising:
a first phase (202) comprising silicon carbide;
a second phase (203) comprising at least 90 wt% alumina, wherein the second phase (203) is a discrete intergranular phase located at the grain boundaries of the first phase (202);
wherein a majority of the second phase (203) within the body (201) is located at triple boundary regions between three or more grains of the first phase (202);
wherein the first phase (202) has an average grain size of not greater than 2 µm (microns),
wherein the first phase (202) has a maximum grain size of not greater than 10 µm (microns),
wherein sintering is conducted at a sintering temperature of 2050°C, using a sintering duration of 1 hour, and using hot pressing,
wherein the body (201) comprises at least one of:
a second phase count index of at least 1000/100 microns image width based on a SEM image having a total of 100 µm (microns);
a second phase average area index of at least 2000 pixels/100 microns image width based on a SEM image having a total of 100 µm (microns);
a second phase average size index of at least 3.00 pixels²;
or any combination thereof, and
wherein the body (201) comprises an average flexural strength of at least 700 MPa determined according to the four point bend test using configuration B of ASTM C1161-02C.

## Patentansprüche

1. Körper (201), umfassend:
eine erste Phase (202), die Siliziumkarbid umfasst;
eine zweite Phase (203), die ein Metalloxid umfasst, wobei die zweite Phase (203) eine diskrete intergranulare Phase ist, die sich an den Korngrenzen der ersten Phase (202) befindet;
wobei sich ein Großteil der zweiten Phase (203) innerhalb des Körpers (201) an Dreifachgrenzbereichen zwischen drei oder mehr Körnern der ersten Phase (202) befindet;
wobei die erste Phase (202) eine mittlere Korngröße von nicht größer als 2 µm (Mikrometer) aufweist, wie bestimmt durch das Abfangverfahren unter Verwendung von Rasterelektronenmikroskop-(SEM, scanning electron microscope)-Mikrofotografien, wie in der Beschreibung beschrieben,
wobei die erste Phase (202) eine maximale Korngröße von nicht größer als 10 µm (Mikrometer) aufweist, unter Verwendung derselben Technik, die zum Messen der mittleren Korngröße verwendet wird, aber der Wert auf der größten gemessenen Liniensegmentlänge basiert,
wobei der Körper (201) einen zweiten Phasenzählindex von mindestens 1000/100 µm (Mikrometer) Bildbreite umfasst, basierend auf einem SEM-Bild, das eine Gesamtbreite von 100 Mikrometer aufweist, und
wobei der Körper (201) eine mittlere Biegefestigkeit von mindestens 700 MPa umfasst, bestimmt gemäß dem Vierpunkt-Biegetest unter Verwendung der Konfiguration B von ASTM C1161-02C.

2. Körper (201) nach Anspruch 1, wobei der Körper (201) mindestens 70 Gew.-% und nicht größer als 99 Gew.-% der ersten Phase (202) des Gesamtgewichts des Körpers umfasst, und wobei die erste Phase (202) alpha-Phasen-Siliziumkarbid umfasst.

3. Körper (201) nach Anspruch 1, wobei der Körper (201) mindestens 1 Gew.-% und nicht größer als 10 Gew.-% der zweiten Phase (203) des Gesamtgewichts des Körpers (201) umfasst, und wobei das Metalloxid der zweiten Phase (203) Aluminium und Silizium umfasst.

4. Körper (201) nach Anspruch 1, wobei der Körper (201) eine mittlere Biegefestigkeit von mindestens 700 MPa und nicht größer als 1200 MPa umfasst.

5. Körper (201) nach Anspruch 1, wobei der zweite Phasenzählindex mindestens 1100/100 µm (Mikrometer) Bildbreite und nicht größer als 4000/100 µm (Mikrometer) Bildbreite ist, basierend auf einem SEM-Bild, das insgesamt 100 µm (Mikrometer) aufweist.

6. Körper (201) nach Anspruch 1, wobei der zweite mittlere Phasenflächenindex mindestens 2500 Pixel/100 µm (Mikrometer) Bildbreite und nicht größer als 30000 Pixel/100 µm (Mikrometer) Bildbreite ist, basierend auf einem SEM-Bild, das eine Gesamtbreite von 100 µm (Mikrometer) aufweist.

7. Körper (201) nach Anspruch 1, wobei der zweite mittlere Phasengrößenindex mindestens 3,10 Pixel², und nicht größer als 10,00 Pixel² ist.

8. Körper (201) nach Anspruch 1, wobei der Körper (201) mindestens eines umfasst von:
einem zweiten Phasenzählindex innerhalb eines Bereichs von mindestens 1000/100 µm (Mikrometer) Bildbreite und nicht größer als 4000/100 µm (Mikrometer) Bildbreite basierend auf einem SEM-Bild, das insgesamt 100 µm (Mikrometer) aufweist;
einen zweiten mittleren Phasenflächenindex innerhalb eines Bereichs von mindestens 2000 Pixel/100 µm (Mikrometer) Bildbreite und nicht größer als 30000 Pixel/100 µm (Mikrometer) Bildbreite basierend auf einem SEM-Bild, das insgesamt 100 µm (Mikrometer) aufweist;
einen zweiten mittleren Phasengrößenindex innerhalb eines Bereichs von mindestens 3,00 Pixel² und nicht größer als 10,00 Pixel²;
oder eine beliebige Kombination davon.

9. Körper (201) nach Anspruch 1, wobei der Körper (201) einen gemäß ASTM CO74/CO704 M-15 bestimmten mittleren Verschleisswert innerhalb eines Bereichs einschließt, der mindestens 0,0001 cm³ und nicht größer als 0,1 cm³ einschließt, und wobei ferner der Körper (201) eine mittlere Bruchzähigkeit von mindestens 3,7 MPa m^{1/2} und nicht größer als 7 MPa m^{1/2} umfasst, bestimmt, wie in der Beschreibung beschrieben, und wobei der Körper ferner eine mittlere Härte (HV_{0,1 kg}) von mindestens 20 GPa und nicht größer als 40 GPA umfasst, bestimmt, wie in der Beschreibung beschrieben.

10. Verfahren zur Formung eines Körpers (201), umfassend:
Erhalten einer Mischung aus Pulvermaterial, umfassend:
wobei die Mischung mindestens 93 Gew.-% eines ersten Pulvermaterials umfasst, wobei das erste Pulvermaterial mindestens 99 Gew.-% alpha-Phasen-Siliziumkarbid umfasst; und
ein zweites Pulvermaterial, das mindestens 90 Gew.-% Aluminiumoxid umfasst, wobei das zweite Pulvermaterial in einer Menge von mindestens 1 Gew.-% und nicht mehr als 7 Gew.-% der Mischung vorhanden ist; und
Sintern der Mischung aus Pulvermaterial, um einen Körper zu formen, umfassend:
eine erste Phase (202), die Siliziumkarbid umfasst;
eine zweite Phase (203), die mindestens 90 Gew.-% Aluminiumoxid umfasst, wobei die zweite Phase (203) eine diskrete intergranulare Phase ist, die sich an den Korngrenzen der ersten Phase (202) befindet;
wobei sich ein Großteil der zweiten Phase (203) innerhalb des Körpers (201) an Dreifachgrenzbereichen zwischen drei oder mehr Körnern der ersten Phase (202) befindet;
wobei die erste Phase (202) eine mittlere Korngröße von nicht größer als 2 µm (Mikrometer) aufweist,
wobei die erste Phase (202) eine maximale Korngröße von nicht größer als 10 µm (Mikrometer) aufweist,
wobei das Sintern bei einer Sintertemperatur von 2050 °C unter Verwendung einer Sinterdauer von 1 Stunde und unter Verwendung von Heißpressen durchgeführt wird,
wobei der Körper (201) mindestens eines umfasst von:
einem zweiten Phasenzählindex von mindestens 1000/100 Mikrometer Bildbreite basierend auf einem SEM-Bild, das insgesamt 100 µm (Mikrometer) aufweist;
einem zweiten mittleren Phasenflächenindex von mindestens 2000 Pixel/100 Mikrometer Bildbreite basierend auf einem SEM-Bild, das insgesamt 100 µm (Mikrometer) aufweist;
einem zweiten mittleren Phasengrößenindex von mindestens 3,00 Pixeln²;
oder einer beliebigen Kombination davon, und
wobei der Körper (201) eine mittlere Biegefestigkeit von mindestens 700 MPa umfasst,
bestimmt gemäß dem Vierpunkt-Biegetest unter Verwendung der Konfiguration B von ASTM C1161-02C.

## Revendications

1. Corps (201) comprenant :
une première phase (202) comprenant du carbure de silicium ;
une seconde phase (203) comprenant un oxyde métallique, la seconde phase (203) étant une phase intergranulaire séparée située aux joints de grains de la première phase (202) ;
la majeure partie de la seconde phase (203) à l'intérieur du corps (201) étant située dans des régions de joints triples entre au moins trois grains de la première phase (202) ;
dans lequel la première phase (202) a une granulométrie moyenne inférieure ou égale à 2 µm (microns), déterminée par le procédé d'interception utilisant des photomicrographies au microscope électronique à balayage (MEB), telles que décrites dans la description,
dans lequel la première phase (202) a une granulométrie maximale inférieure ou égale à 10 µm (microns), selon la même technique que celle utilisée pour mesurer la granulométrie moyenne, mais la valeur est basée sur la plus grande longueur de segment de ligne mesurée,
le corps (201) comprenant un indice de comptage de seconde phase d'au moins 1 000/100 µm (microns) de largeur d'image, basé sur une image MEB ayant une largeur totale de 100 microns, et
le corps (201) comprenant une résistance moyenne à la flexion d'au moins 700 MPa déterminée selon le test de flexion en quatre points à l'aide de la configuration B de la norme ASTM C1161-02C.

2. Corps (201) selon la revendication 1, le corps (201) comprenant au moins 70 % en poids et pas plus de 99 % en poids de la première phase (202) pour le poids total du corps, et la première phase (202) comprenant du carbure de silicium en phase alpha.

3. Corps (201) selon la revendication 1, le corps (201) comprenant au moins 1 % en poids et pas plus de 10 % en poids de la seconde phase (203) pour le poids total du corps (201), et l'oxyde métallique de la seconde phase (203) comprenant de l'aluminium et du silicium.

4. Corps (201) selon la revendication 1, le corps (201) comprenant une résistance à la flexion moyenne d'au moins 700 MPa et inférieure ou égale à 1200 MPa.

5. Corps (201) selon la revendication 1, l'indice de comptage de seconde phase étant d'au moins 1 100/100 µm (microns) de largeur d'image et inférieur ou égale à 4 000/100 µm (microns) de largeur d'image sur la base d'une image MEB ayant un total de 100 µm (microns).

6. Corps (201) selon la revendication 1, l'indice de surface moyen de seconde phase étant d'au moins 2 500 pixels/100 µm (microns) de largeur d'image et inférieur ou égal à 30 000 pixels/100 µm (microns) de largeur d'image sur la base d'une image MEB ayant une largeur totale de 100 µm (microns).

7. Corps (201) selon la revendication 1, le second indice de taille moyenne de phase étant d'au moins 3,10 pixels² et inférieur ou égal à 10,00 pixels².

8. Corps (201) selon la revendication 1, le corps (201) comprenant au moins un parmi :
un indice de comptage de seconde phase dans une plage d'au moins 1 000/100 µm (microns) de largeur d'image et pas plus de 4 000/100 µm (microns) de largeur d'image sur la base d'une image MEB ayant un total de 100 µm (microns) ;
un indice de surface moyen de seconde phase dans une plage d'au moins 2 000 pixels/100 µm (microns) de largeur d'image et pas plus de 30 000 pixels/100 µm (microns) de largeur d'image sur la base d'une image MEB ayant un total de 100 µm (microns) ;
un second indice de taille moyenne de phase dans une plage d'au moins 3,00 pixels² et pas plus de 10,00 pixels² ;
ou une quelconque de leur combinaison.

9. Corps (201) selon la revendication 1, le corps (201) comprenant une valeur d'usure moyenne déterminée selon la norme ASTM CO74/CO704 M-15 dans une plage comprise entre au moins 0,0001 cm³ et pas plus de 0,1 cm³, et en outre le corps (201) comprenant une ténacité moyenne à la rupture d'au moins 3,7 MPa m^{1/2} et inférieure ou égale à 7 MPa m^{1/2}déterminée telle que décrite dans la description, et en outre le corps comprenant une dureté moyenne (HV_{0,1 kg}) d'au moins 20 GPa et inférieure ou égale à 40 GPA, déterminée telle que décrite dans la description.

10. Procédé de formation d'un corps (201) comprenant :
l'obtention d'un mélange de matière pulvérulente comprenant :
le mélange comprenant au moins 93 % en poids d'une première matière pulvérulente, la première matière pulvérulente comprenant au moins 99 % en poids de carbure de silicium en phase alpha ; et
la seconde première matière pulvérulente comprenant au moins 90 % en poids d'alumine,
la seconde matière pulvérulente étant présente à raison d'au moins 1 % en poids et pas plus de 7 % en poids du mélange ; et
le frittage du mélange de matière pulvérulente pour former un corps comprenant :
une première phase (202) comprenant du carbure de silicium ;
une seconde phase (203) comprenant au moins 90 % en poids d'alumine, la seconde phase (203) étant une phase intergranulaire séparée située aux joints de grains de la première phase (202) ;
la majeure partie de la seconde phase (203) à l'intérieur du corps (201) étant située dans des régions de joints triples entre au moins trois grains de la première phase (202) ;
la première phase (202) ayant une granulométrie moyenne inférieure ou égale à 2 µm (microns),
la première phase (202) ayant une granulométrie maximale inférieure ou égale à 10 µm (microns),
le frittage étant effectué à une température de frittage de 2 050°C, pendant une durée de frittage de 1 heure, et en faisant appel à une compression à chaud,
le corps (201) comprenant au moins l'un parmi :
un indice de comptage de seconde phase d'au moins 1 000/100 microns de largeur d'image sur la base d'une image MEB ayant un total de 100 µm (microns) ;
un indice de surface moyen de seconde phase d'au moins 2 000 pixels/100 microns de largeur d'image sur la base d'une image MEB ayant un total de 100 µm (microns) ;
un indice de taille moyenne de seconde phase d'au moins 3,00 pixels² ;
ou une quelconque de leur combinaison, et
le corps (201) comprenant une résistance moyenne à la flexion d'au moins 700 MPa déterminée selon le test de flexion en quatre points à l'aide de la configuration B de la norme ASTM C1161-02C.
